# EUROPEAN PATENT SPECIFICATION

(11) **EP 3 572 259 B1**
(45) Date of publication and mention of the grant of the patent: **24.03.2021**
(21) Application number: 19176683.1
(22) Date of filing: 27.05.2019
(51) Int. Cl.: B60J 10/70, H05B 3/14, H05B 3/86, B60J 1/00

(54) **A COMPOSITE LIFTGATE WITH A WINDOW INCLUDING AN INTERLOCKING SEAL**
ZUSAMMENGESETZTE HECKKLAPPE MIT EINEM FENSTER MIT EINER INEINANDERGREIFENDEN DICHTUNG
HAYON COMPOSITE DOTÉ D'UNE VITRE COMPRENANT UN JOINT D'INTERVERROUILLAGE

(30) Priority: 25.05.2018 US 201862676358 P
(43) Date of publication of application: 27.11.2019
(73) Proprietor: Mathson Composite Group LLC, Oakland Township, MI 48306 (US)
(72) Inventor: MATHEW, Boney, Oakland Township, MI Michigan 48306 (US)
(74) Representative: McDonough, Jonathan

(56) References cited:
- EP-A2- 0 394 089
- US-A- 5 339 584

## Description

### BACKGROUND OF THE INVENTION

### 1. Field of Invention

The present invention generally relates to a composite liftgate and a window for the composite liftgate.

### 2. Related Prior Art

Composite liftgates for vehicles are well known in the art. One of the current trends in the automobile industry is to lower vehicle weight to help achieve better fuel economy, thus helping to meet fuel economy standards and to offset the higher fuel prices. Liftgates are traditionally made from stamped steel panels that are heavy and have a high tooling cost. Sheet Molding Compound (SMC) is an alternative to steel for the inner and outer panels of the liftgate. Using SMC has several manufacturing concerns related to the material and process. Steel and SMC liftgates have a mass penalty over thermoplastics. There are also styling restrictions with traditional sheet metal components. Thermoplastic composite type materials used for liftgate applications also have difficulty meeting customer performance specifications.

Defrosters for vehicle windows are also well known in the art. Warm air from a vehicle's heating, ventilation, and air conditioning (HVAC) system is typically used to remove fogging, frost, snow, and ice, from a vehicle's windshield and front side windows, hereinafter generically referred to as defrosting. However, routing additional ductwork to carry heated air from the HVAC system to other window surfaces, such as the vehicle's rear window or outside mirrors, has been found to be uneconomical and/or ineffective. Therefore, secondary defrosting systems using resistive heating to defrost rear windows and mirrors have been developed and typically include resistive wires embedded within the glass or resistive circuits printed on an interior surface of the glass. However, defrosting using these methods is non-uniform, as the area around the resistive circuits will heat up first. The printed circuits are also easily damaged by abrasion or cracking, and can impede a driver vision.

Accordingly, there exists a need for a window for a liftgate which is both lightweight, as well as structurally sound enough to meet various load requirements, while also providing improved defrosting and visibility

EP 0 394 089 A2 shows a window for a vehicle according to the prior art.

### SUMMARY OF THE INVENTION

It is one aspect of the present invention to provide a window for a vehicle, particularly a window for a composite liftgate. The window includes a multi-layered body extending to a periphery and including an inner layer, an outer layer, and an intermediate layer sandwiched between the inner and outer layer. The intermediate layer is comprised of a transparent heat conductive material. At least one heat generation element is operably connected with the intermediate layer for generating heat to transfer to the intermediate layer and defrost the window. A seal extends about the periphery and disposed in interlocked relationship with the body to seal the intermediate layer between the inner and outer layers.

The composite liftgate constructed with a window in accordance with the present invention is lightweight and improves structural and impact strength. The window in accordance with the present invention also provides improved sealing, improved visibility, and easy installation.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a perspective view of a composite liftgate in accordance with one embodiment of the present invention;
Figure 2 is an exploded view of a base of the composite liftgate made from a plurality of stacked sheets;
Figure 3 is cross-sectional view of the composite liftgate illustrating the base including a coating and a cover inside a press mold;
Figure 4 is a perspective view of a long carbon fiber pellet for use in the cover;
Figure 5 is a perspective view of a short carbon fiber pellet for use in the cover;
Figure 6 is a fragmentary exploded view of a multi-layered window for the composite liftgate illustrating an intermediate layer sandwiched between an inner and outer layer;
Figure 7 is a fragmentary cross-sectional view of the multi-layered window illustrating the intermediate layer comprised of a flexible film;
Figure 8 is a fragmentary cross-sectional view of the multi-layered window illustrating the intermediate layer comprised of a wires and strips or tapes;
Figure 9 is a front view of the window illustrating a heat generation element operably connected with the intermediate layer;
Figure 10 is a schematic view of the window illustrating a wireless power transfer unit disposed in communication with the heat generation element;
Figure 11 is an exploded perspective view of the composite liftgate illustrating a seal extending around a periphery of the window;
Figure 12 is a front view of the window illustrating at least one groove and at least one protrusion extending continuously about the window and seal to establish an interlocked relationship therebetween;
Figure 13 is a front view of the window illustrating the at least one groove and the at least one protrusion extending intermittently around the window;
Figure 14 is a cross-sectional view taken along the lines 14-14 of the composite liftgate in Figure 1;
Figure 15 is a schematic view of a method of making the composite liftgate; and
Figure 16 is a flowchart for the method of making the composite liftgate.

### DESCRIPTION OF THE ENABLING EMBODIMENTS

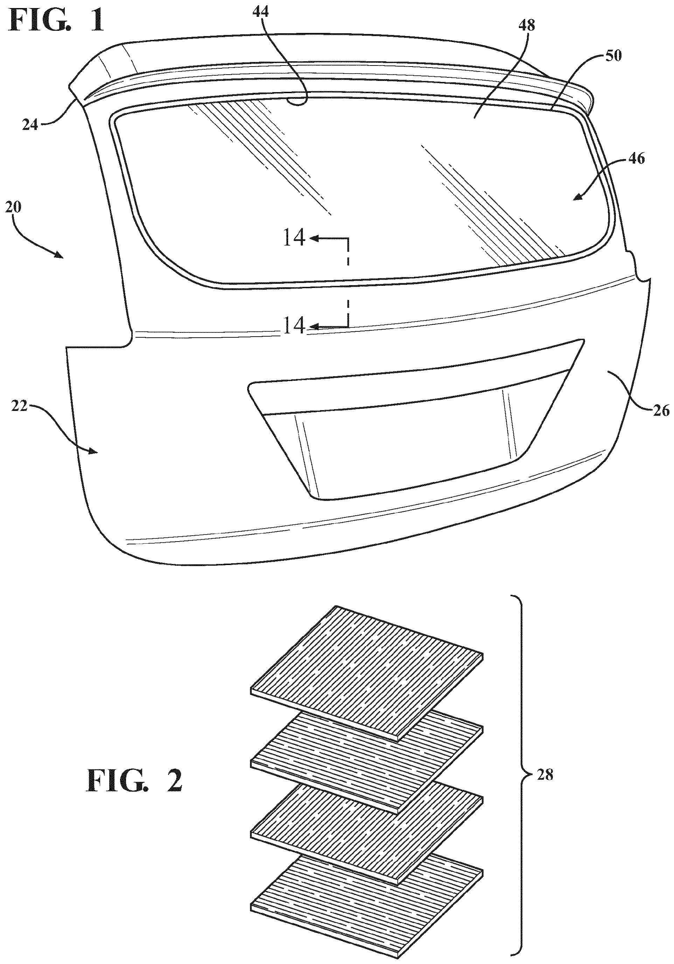

Referring to the Figures, wherein like numerals indicate corresponding parts throughout the several views, a composite liftgate **20** is generally shown in Figure 1. The composite liftgate **20** includes a main portion **22** comprised of a composite material and having a generally rectangular shape. The main portion **22** has an inner surface **24** for facing an interior of the vehicle and an outer surface **26,** disposed opposite the inner surface **24,** for facing an exterior of the vehicle. The main portion **22** has a base **28** made from a plurality of stacked sheets. As best shown in Figure 2, each one of the stacked sheets are made from a plurality of fibers selected from at least one of carbon, aramid, glass, or thermoplastic fibers. In a preferred arrangement, the fibers are a mixture containing carbon and at least one other fiber selected from aramid, glass, or thermoplastic fibers. The fibers are present in an amount of at least 50 vol.% in the main portion **22** to ensure excellent mechanical properties while minimizing weight of composite liftgate **20.**

Typically, in each one of the stacked sheets, the fibers are oriented in a single direction. However, as best illustrated in Figure 2, according to a preferred arrangement, each of the stacked sheets are oriented differently relative to adjacent sheets. More preferably, each one of the stacked sheets is oriented at a ninety-degree angle relative to the adjacent sheets to improve structural and impact strength of the composite liftgate **20.**

A coating **30,** made from a surface resin, covers and encapsulates the base **28.** The surface resin also infiltrates through the base **28,** connecting the fibers with one another and joining the stacked sheets with one another, to improve the tensile strength of the composite liftgate **20.** The coating **30** preferably contains polyurethane made from a chemical reaction using a first component containing polyol and a second component containing isocyanate. Without being bound by theory, it is believed that the chemical reaction between the polyol and isocyanate forms a primary network and a secondary network. The primary network has a plurality of urethane bonds thereby forming the polyurethane network. The secondary network is a non-covalent hydrogen bonding network thereby providing the coating **30** with a self-heating property.

In an alternative arrangement, the coating **30** contains polyamide made from a chemical reaction using ε-Caprolactam, an activator, and a catalyst. A specific example of a useful polyamide is polycaproamide, also known as Nylon 6 or Polyamide 6. The polycaproamide can be produced by mixing the ε-Caprolactam with the activator and the catalyst and curing the mixture. It should be appreciated that additional additives, such as thickeners and/or compatibilizer, can be added to the mixture as well. Preferably, the polyamide has a melting temperature equal to or above 150°C to provide good modulus, impact strength, heat resistance, and chemical resistance to the coating **30.**

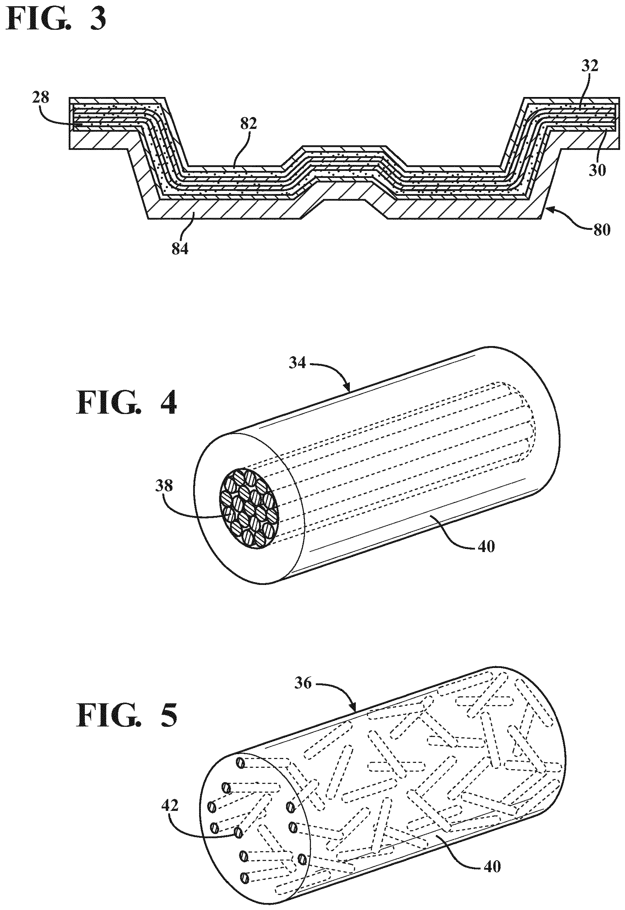

As best illustrated in Figure 3, the coating **30** can also contain ecologically friendly materials such as acrylic based thermoplastic resin free of styrene. It should be appreciated that the styrene-free coating can be partially derived from biologically renewable resources and recycled materials, all without sacrificing performance. At room temperature, e.g. approximately 20°C, the acrylic based thermoplastic resin has a Brookfield viscosity between 100cP and 500 cP allowing for excellent impregnation/infiltration into the fibers. In addition, the acrylic based thermoplastic resin can be made from a two component system including polyethylene methacrylate (PMMA) and an initiator. The initiator can be a Luperox® peroxide initiator. Preferably, the acrylic based thermoplastic resin are formed over the base **28** via a resin transfer molding process. The molding temperature during the resin transfer molding process should be approximately 80°C under a predetermined pressure between 15 psi and 150 psi.

As further illustrated in Figure 3, the composite liftgate **20** includes a cover **32** bonded to the coating **30** to provide a finish to the composite liftgate **20.** The cover **32** is formed from a plurality of pellets **34, 36** containing carbon fiber to provide weight reduction, improve modulus, and enhance impact strength. The pellets **34, 36** can be long carbon fiber pellets **34** or short carbon fiber pellets **36.** As best shown in Figure 4, the long carbon fiber pellets **34** are comprised of a plurality of long carbon fibers **38** being enclosed by a matrix resin **40.** Preferably, the matrix resin **38** contains polyamide. The long carbon fibers **38** have an average fiber length of 1.0mm. As best shown in Figure 5, the short carbon fiber pellets **36** are comprised of a plurality of short carbon fibers **42** randomly disposed in the matrix resin **38** containing polyamide. The short carbon fibers **42** have an average fiber length of 0.30mm.

According to another arrangement, the cover **32** is formed from a mixture containing Acrylonitrile Butadiene Styrene (ABS) and Nylon with the ABS providing painting stability and Nylon providing chemical resistance to the cover **32.** Accordingly, with the cover **32** being made from a mixture containing ABS and Nylon, it allows users to paint the cover **32** without any primers thereby reducing the manufacturing cost for the composite liftgate **20.**

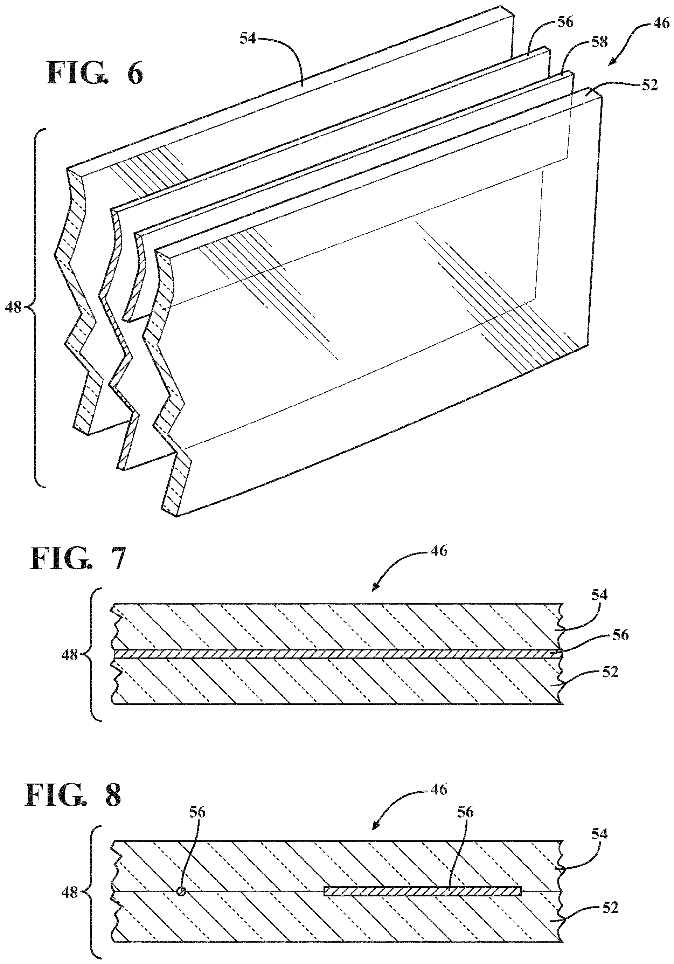

Referring back to Figure 1, the main portion **22** of the composite liftgate **20** defines an opening **44,** having a generally rectangular shape, extending through the cover **32,** the coating **30,** and the base **28.** A window **46** including a body **48,** having a generally rectangular shape, attaches to the main portion **22** and covers the opening **44** for allowing a user to see through the main portion **22.** The body **48** defines a periphery **50** extending about the body **48.** As best shown in Figure 6, the body **48** of the window **46** is multi-layered, and includes an outer layer **52,** an inner layer **54,** and an intermediate layer **56** sandwiched between the outer layer **52** and the inner layer **52.** The outer layer **52** is disposed adjacent to the exterior of the vehicle. The inner layer **54** is disposed adjacent to the interior of the vehicle. While the window **46** is described herein for use in association with a composite liftgate **20,** the window **46** could also be used for other window applications, such as for front and side windows, or a sunroof, of a vehicle, as well as for a helicopter cockpit window, without departing from the subject disclosure.

As illustrated in Figure 7, in one embodiment, the intermediate layer **56** is a flexible film made from a transparent heat conductive material, preferably, selected from a composite containing graphene and poly(dimethyl siloxane), a composite containing graphene and Poly(3,4,-ethylenedioxythiophene), a composite containing graphene and poly(N-hydroxyl methyl) acrylamide, or Barium Stannate. More preferably, the transparent heat conductive material is the composite containing graphene and poly(dimethyl siloxane) or the composite containing graphene and Poly(3,4,-ethylenedioxythiophene). The graphene and poly(dimethyl siloxane) composites are flexible, foldable and stretchable conducts. The graphene and Poly(3,4,-ethylenedioxythiophene) composites have good solution processability, excellent optical transparency, conductivity and flexibility. Composites containing graphene are preferable for the flexible film because graphene is an excellent electrical conductor due to graphene's chemical structure and nanometric thickness. Graphene is also lightweight and stronger than steel which can be used to reinforce polymers, fiberglass, and carbon fibers. In addition, as a two-dimensional material, graphene displays remarkable optical properties, including a simple transparency for visible light. Further, graphene is hydrophobic which can be used for tailoring special coating in marine, aerospace, and automotive markets.

As illustrated in Figure 8, in another embodiment, the intermediate layer **56** can be a plurality of wires, strips, or tapes made from a graphene-based composite material or a silver nano-composite sandwiched between the outer layer **52** and the inner layer **54.** Alternatively, the intermediate layer **56** can be a ceramic material containing indium tin oxide or a glass coated with indium tin oxide. Yet in another embodiment, the outer layer **52** or the inner layer **54** can include surface mounted non-metallic grids or films (not shown) such as a graphene-based composite material or a silver nano-composite.

The outer layer **52** and the inner layer **54** are comprised of optically transparent polymeric materials. In a preferred arrangement, the inner and outer layers **52, 54** are comprised of Polymethyl Methacrylate (PMMA) or Polycarbonate (PC), namely, because both PMMA and PC have improved impact resistance and lower weight in comparison with the traditional safety glass. More preferably, the outer layer **52** is a transparent material containing PMMA to provide improved ultraviolet resistance and the inner layer **54** is a transparent material containing PC to provide improved impact resistance. Optionally, the outer layer **52** and the inner layer **54** can contain a thermal conductive additive of Polycarbonate/Alumina (Al₂O₃) composites or Polyethylene nanofibers to further improve the thermal conductivity of the outer layer **52** and the inner layer **54.** In addition, the outer layer **52** can include a hard coating layer formed thereon by plasma enhanced chemical vapor deposition to improve abrasion and weather resistance.

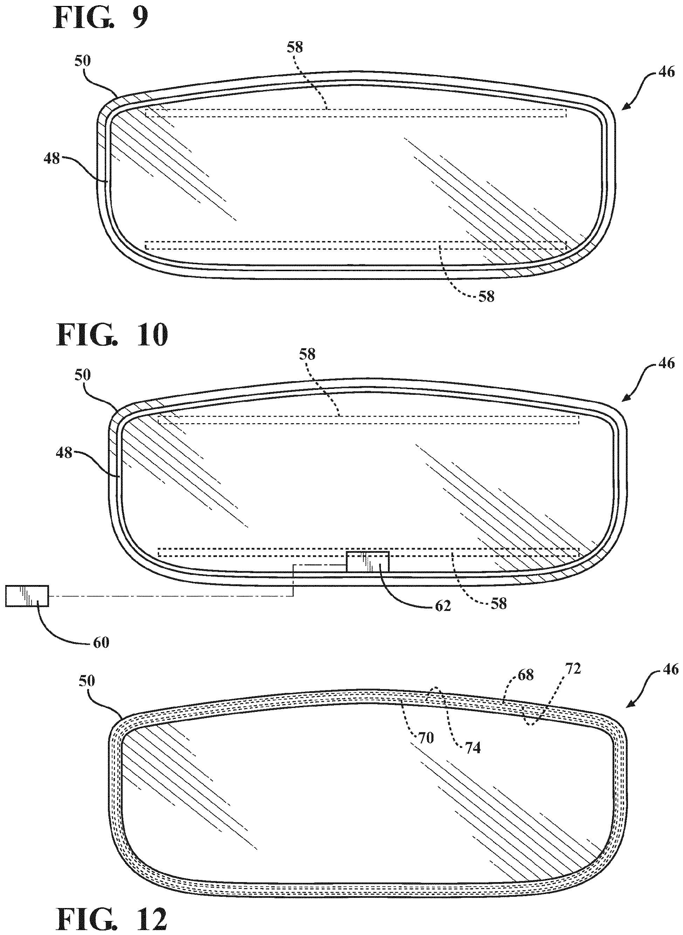

As best show in Figure 9, at least one heat generation element **58** is operably connected with the intermediate layer **56.** For example, the at least one heat generation element **58** is disposed in an abutment relationship with the intermediate layer **56,** and thus also disposed between the inner and outer layers **52, 54,** for receiving power from a power source and generating heat to transfer to the intermediate layer **56** to defrost the multi-layered polymeric window **46.** The at least one heat generation element **58** preferably includes a pair of heat generation elements **58,** disposed in opposite and spaced relationship from one another, adjacent to the periphery **50** of the body **48** and in abutment with the intermediate layer **56.** The heat generation elements **58** are disposed in electrical communication with a power source which applies a current to the heat generation elements **58.** In response, the resistance of the heat generation elements **58** increases the temperature of the heat generation elements **58** to heat up the intermediate layer **56,** and then the outer layer **52** and inner layer **54,** to defrost the window **46.**

As best illustrated in Figure 10, in one arrangement of the heat generation element **58,** the vehicle can include a wireless power transfer unit **60, 62** to supply a current to the heat generation elements **58.** The wireless power transfer unit **60, 62** includes an emitter **60** and a receiver **62.** The emitter **60** is attached to the interior of the vehicle and the receiver **62** is electrically connected to at least one of the heat generation elements **58.** In operation, the emitter **60** generates RF waves to the receiver **62.** Upon receiving the RF waves, the receiver **62** converts the RF waves into pockets of energy thereby sending currents through the heat generation elements **58.**

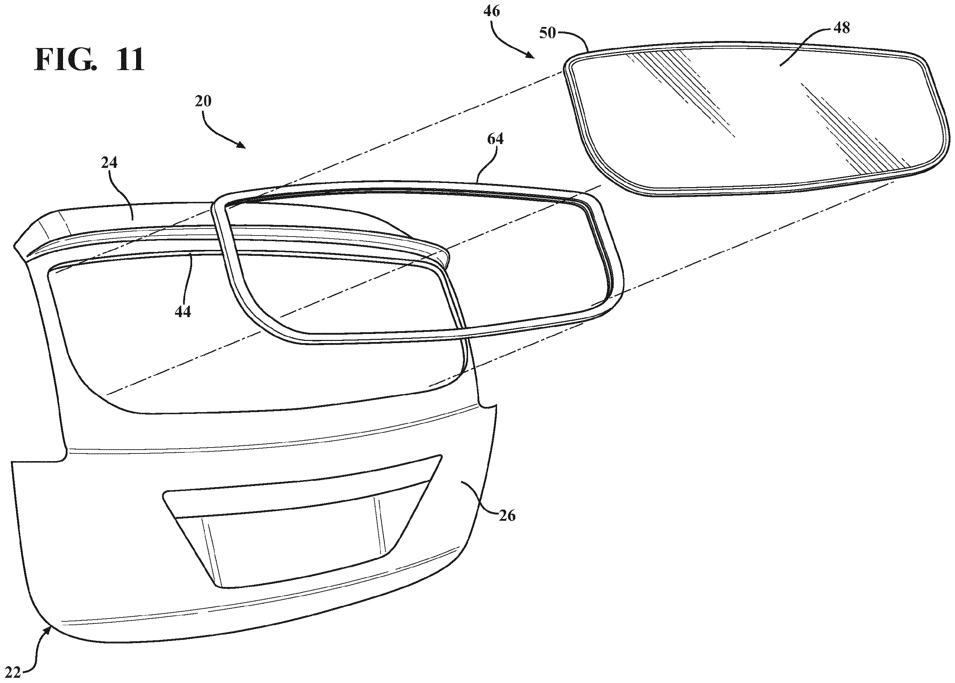

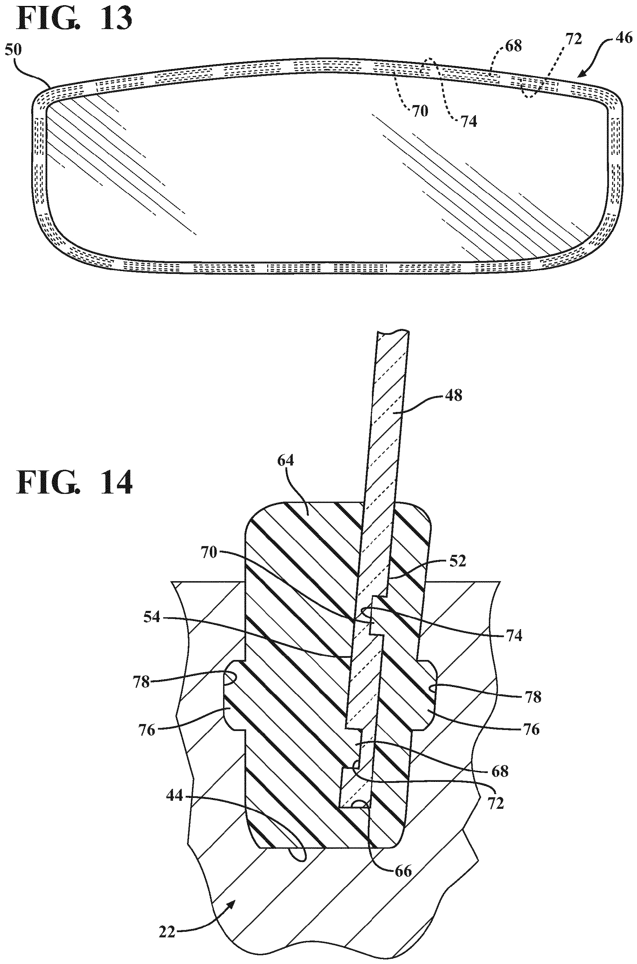

As illustrated in Figure 11, the window **46** further includes a seal **64** comprised of elastomeric material coupled to and extending about the periphery **50** of the body **48** for sealing the intermediate layer **56,** as well as the heat generation element **58,** between the outer and inner layers **52, 54.** For example, as illustrated in Figure 14, the seal **64** defines a recess **66** extending along the seal **64** for receiving the body **48** to couple the seal **64** to the body **48** and dispose the seal **64** in an air and water tight arrangement about the periphery **50** of the window **46.** The seal **64** is interlocked to the body **48** of the window **46** via a molded or snap-fit connection to allow for an easy installation of the seal **64** onto the body **48** while, at the same time, allowing for close abutment between the seal **64** and the body **48** thereby improving the sealing capabilities. In other words, the seal **64** can be molded on or snapped onto the polymeric window **46** to seal the multiple layers **52, 54, 56.** With the seal **64** being disposed about the periphery **50** of the body **48** and in close abutment with the body **48,** the interlocked seal **64** prevents dust and/or debris as well as water from entering between the outer layer **52** and the inner layer **54** thereby improving the visibility of the driver.

As best shown in Figure 14, the seal **64** includes at least one protrusion **68, 70** extending into the recess **66.** The body **48** of the window **46** correspondingly includes at least one groove **72, 74** located on the inner layer **54** or the outer layer **52,** adjacent and spaced from the periphery **50,** for receiving the at least one protrusion **68, 70** to establish the interlocked connection between the seal **64** and the window **46.** Preferably, the at least one groove **72, 74** includes a pair of grooves **72, 74** and the at least one protrusion **68, 70** includes a pair of protrusions **68, 70** to provide a stronger and improved molded or snap-fit connection with both of the inner and outer layers **52, 54** of the window **48.** In other words, the at least one protrusion **68, 70** and the at least one groove **72, 74** improve the strength of the interlocking connection between the seal **64** and the window **46.**

As noted immediately above, the pair of grooves **72, 74** has a first groove **72** and a second groove **74,** adjacent and spaced from the periphery **50.** The first groove **72** is located on the inner layer **54,** adjacent and spaced from the periphery **50,** extending about the body **48** and toward the outer layer **52.** The second groove **74** is located on the outer layer **52,** adjacent to and spaced from the periphery **50,** extending about the body **48** and toward the inner layer **54.** In other words, the first groove **72** and the second groove **74** are located on opposing surfaces of the body **48** and extending towards one another.

The pair of protrusions **68, 70** has a first protrusion **68** for engaging the first groove **72** and a second protrusion **70** for engaging the second groove **74.** The first protrusion **68** extends outwardly from the recess **66** for engaging the first groove **72.** The second protrusion **70,** spaced from the first protrusion **68,** extends outwardly from the recess **66** in a direction opposite of the first protrusion **68** to engage the second groove **74** for securing the seal **64** to the body **48.** In other words, the first protrusion **68** and the second protrusion **70** extend towards one another to engage the first groove **72** and the second groove **74,** respectively, to establish the interlocked, molded or snap-fit, connection of the seal **64** to the body **48** of the window **46.**

As best shown in Figure 12, in one embodiment, the at least one groove **72, 74** extends continuously about the body **48** and the at least one protrusion **68, 70** extends continuously along the seal **64.** In another embodiment, and as best shown in Figure 13, the at least one groove **72, 74** extends intermittently about the body **48** and the at least one protrusion **68, 70** extends intermittently along the seal **64.**

As best illustrated in Figure 11, the seal **64** also facilitates attachment of the window **46** to the opening **44** of the main portion **22** of the composite liftgate **20.** To attach the window **46** to the opening **44** of the composite liftgate **20,** the seal **64** includes at least one projection **76** extending outwardly from the seal **64** for engaging the main portion **22.** Preferably, the seal has a pair of projections **76** extending radially outwardly from the seal **64** and opposite of one another. The main portion **22** of the composite liftgate **20** defines at least one indentation **78** disposed in the opening **44** of the main portion **22** for receiving the at least one projection **76.** Preferably, the main portion has a pair of indentations **78** disposed in the opening **44,** extending in a direction opposite of one another, for receiving the pair of projections **76.** Additional adhesives can be added into the indentations **78** to facilitate with securing the window **46** and the seal to the opening **44.**

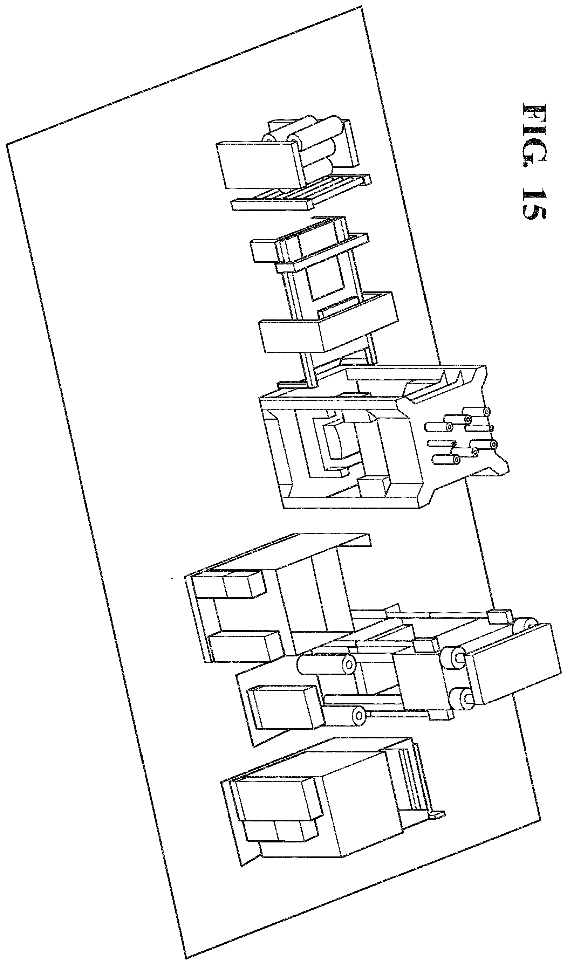

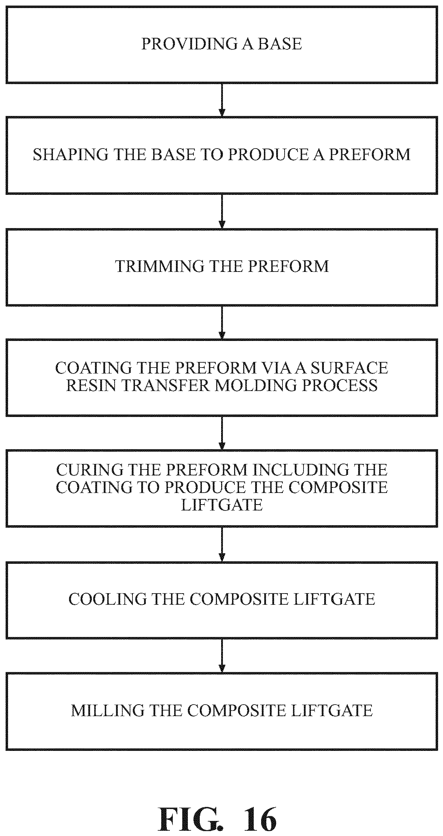

As best illustrated in Figures 15 and 16, a method of making the composite liftgate **20** begins by providing a base **28** of the composite liftgate **20.** The step of providing the base **28** is defined as stacking a plurality of fiber sheets over one another to produce the base **28.** Each one of the fiber sheets can be purchased directly from a manufacturer or, alternatively, manufactured by using fiber filaments. It should be appreciated that, in each one of the stacked sheets, the fibers are preferably oriented in a single direction. As previously described, each one of the stacked sheets are oriented differently relative to the orientation of adjacent one of the stacked sheets, such as, each one of the stacked sheets is oriented at a ninety-degree angle relative to the adjacent one of the stacked sheets, to improve structural and impact strength of the composite liftgate **20.**

The method proceeds with a step of shaping the base **28** to produce a preform. The step of shaping is further defined by disposing the base **28** in a preform press and pressing the base **28** to produce the preform. Then, the method proceeds with a step of trimming the preform to remove excess fibers. With reference to Figure 3, after trimming, the preform is placed into a press mold **80** having a top portion **82** and a bottom portion **84** and a coating **30** formed on the press mold **80** via a surface resin transfer molding process. It should be appreciated that the surface resin transfer molding process is a two-step process. During the first step, a surface resin is introduced into the press mold **80** and infiltrates through the fibers in the preform to form a matrix holding the fibers together. During the second step, after the matrix cures in the press mold **80,** the top and bottom portions **82, 84** of the press mold **80** are opened to a predetermined gap width such that the surface of the preform can be flow-coated with an additional coating of the surface resin in the press mold **80.** This additional coating layer compensates for any irregularities on the surface of the preform and provides additional reinforcement to the base **28.** The surface resin can contain polyurethane, polyamide, or acrylic based thermoplastic resin free of styrene. The thickness of the coating **30** is dependent upon the geometry of the press form and the build-up of the fiber sheets. Typically, the thickness of the coating **30** can range between 0.15 and 0.2mm.

After the surface resin transfer molding process, the press mold **80** is cured to produce the composite liftgate **20.** Following the curing step, the composite liftgate **20** is cooled to prevent warping and ensure dimensional stability. Finally, after cooling, the composite liftgate **20** is milled to remove any excess fiber and resins.

Optionally, the composite liftgate **20** includes a cover **32** bonded to the coating **30** to provide a finish to the composite liftgate **20.** The cover **32** can be formed using the long carbon fiber pellets **34** or the short carbon fiber pellets **36** to provide weight reduction, improve modulus, and enhance impact strength. Alternatively, the cover **32** can also be formed from a mixture containing Acrylonitrile Butadiene Styrene (ABS) and Nylon.

In order to bond the cover **32** to the composite liftgate **20,** the cover **20** is first formed using a molding process and placed into the press mold prior to placing the preform into the press mold **80.** After placing the preform into the press mold **80** including the cover **32,** the surface resin transfer molding process is initiated and then, the press mold **80** is cured to form the composite liftgate **20** including the cover **32.**

## Claims

1. A window for a vehicle comprising: a body (48) extending to a periphery (50) and including an inner layer (52, 54), an outer layer (52), and an intermediate layer (56) sandwiched between said inner and outer layers (52); said intermediate layer (56) comprised of a transparent heat conductive material; at least one heat generation element (58) operably connected with said intermediate layer (56) for generating heat to transfer to said intermediate layer (56) and defrost the window (46, 48); and a seal (64) extending about said periphery (50) and disposed in interlocked relationship with said body (48) to seal (64) said intermediate layer (56) between said inner and outer layers (52).

2. The window as set forth in claim 1, further comprising:
said seal defining a recess for receiving said periphery of said body;
at least one groove defined by said inner or outer layer of said body and disposed in adjacent and spaced relationship with said periphery; and
said seal including at least one protrusion extending into said recess and disposed within said at least one groove to establish the interlocking relationship between said seal and said body.

3. The window as set forth in claim 2 wherein said at least one groove includes a plurality of grooves defined by said inner or outer layers and said at least one protrusion includes a plurality of protrusions extending into said recess and disposed within respective ones of said plurality of grooves.

4. The window as set forth in claim 3, wherein said plurality of grooves includes a first groove defined by said inner layer and a second groove defined by said outer layer; and
said plurality of protrusions include a first protrusion disposed within said first groove and a second protrusion disposed within said second groove.

5. The window as set forth in claim 2 wherein said at least one groove extends continuously along said periphery of said body and said at least one protrusion extends continuously along said seal.

6. The window as set forth in claim 2 wherein said at least one groove extends intermittently along said periphery of said body and said at least one protrusion extends intermittently along said seal.

7. The window as set forth in claim 1, wherein said inner and outer layers are comprised of a transparent polymeric material.

8. The window as set forth in claim 7, wherein said inner and outer layers are comprised of Polymethyl Methacrylate or Polycarbonate.

9. The window as set forth in claim 1, wherein said at least one heat generation element is sandwiched between said inner and outer layers and disposed in an abutment relationship with said intermediate layer for establishing said operable connection.

10. A liftgate for a vehicle comprising: a main portion (22) comprised of a composite material and defining an opening (44); a window (46, 48) covering said opening (44) and including a body (48) extending to a periphery (50); said body (48) including an inner layer (52, 54), an outer layer (52), and an intermediate layer (56) sandwiched between said inner and outer layers (52); said intermediate layer (56) comprised of a transparent heat conductive material; at least one heat generation element (58) operably connected with said intermediate layer (56) for generating heat to transfer to said intermediate layer (56) and defrost the window (46, 48); and a seal (64) extending about said periphery (50) and disposed in interlocked relationship with said body (48) to seal (64) said intermediate layer (56) between said inner and outer layers (52).

11. The liftgate as set forth in claim 10, further comprising:
said seal defining a recess for receiving said periphery of said body;
at least one groove defined by said inner or outer layer of said body and disposed in adjacent and spaced relationship with said periphery; and
said seal including at least one protrusion extending into said recess and disposed within said at least one groove to establish the interlocking relationship between said seal and said body.

12. The liftgate as set forth in claim 11 wherein said at least one groove includes a plurality of grooves defined by said inner or outer layers and said at least one protrusion includes a plurality of protrusions extending into said recess and disposed within respective ones of said plurality of grooves.

13. The liftgate as set forth in claim 12, wherein said plurality of grooves includes a first groove defined by said inner layer and a second groove defined by said outer layer; and
said plurality of protrusions include a first protrusion disposed within said first groove and a second protrusion disposed within said second groove.

14. The liftgate as set forth in claim 10, wherein said inner and outer layers are comprised of a transparent polymeric material.

15. The liftgate as set forth in claim 10 wherein said seal includes at least one projection extending radially outwardly from said seal and said main portion defines at least one indentation disposed adjacent said opening for receiving said at least one projection and mating said window with said main portion.

## Patentansprüche

1. Fenster für ein Fahrzeug, umfassend: einen Körper (48), der sich bis zu einer Peripherie (50) erstreckt und eine innere Schicht (54), eine äussere Schicht (52), und eine Zwischenschicht (56), weiche zwischen der inneren und der äusseren Schichten (54, 52) angeordnet ist, umfasst; wobei die Zwischenschicht (56) aus einem transparenten wärmeleitenden Material besteht; mindestens ein Wärme erzeugendes Element (58), welches mit dieser Zwischenschicht (56) operabel verbunden ist, um Wärme zu erzeugen, um diese auf die Zwischenschicht (56) zu übertragen und das Fenster (46, 48) abzutauen; und eine Dichtung (64), die sich um die Peripherie (50) erstreckt und in einer ineinandergreifenden Relation zu diesem Körper (48) angeordnet ist, um die Zwischenschicht (56) zwischen der inneren und der äusseren Schichten (54, 52) abzudichten (64).

2. Fenster nach Anspruch 1, ferner umfassend:
dass die Dichtung eine Aussparung zum Aufnehmen der Peripherie dieses Körpers definiert;
dass mindestens eine Rille, die durch die innere oder äussere Schicht des Körpers definiert und in benachbarter und beabstandeter Anordnung zu der Peripherie angeordnet ist; und
dass diese Dichtung mindestens einen Vorsprung aufweist, der sich in die Aussparung erstreckt und in der mindestens einen Rille angeordnet ist, um die verriegelnde Relation zwischen dieser Dichtung und diesem Körper herzustellen.

3. Fenster nach Anspruch 2, wobei diese mindestens eine Rille eine Vielzahl von Rillen umfasst, die durch die inneren oder äusseren Schichten definiert sind, und wobei der mindestens eine Vorsprung eine Vielzahl von Vorsprüngen umfasst, die sich in die Aussparung erstrecken und in den jeweiligen der Vielzahl von Rillen angeordnet sind.

4. Fenster nach Anspruch 3, wobei diese Vielzahl von Rillen eine erste Rille umfasst, welche durch die innere Schicht definiert ist, und eine zweite Rille, welche durch die äussere Schicht definiert ist; und
wobei diese Vielzahl von Vorsprüngen einen ersten Vorsprung, der in der ersten Rille angeordnet ist und einen zweiten Vorsprung, der in der zweiten Rille angeordnet ist, umfasst.

5. Fenster nach Anspruch 2, wobei sich die mindestens eine Rille kontinuierlich entlang dieser Peripherie dieses Körpers erstreckt und dieser mindestens eine Vorsprung kontinuierlich entlang dieser Dichtung verläuft.

6. Fenster nach Anspruch 2, wobei sich diese mindestens eine Rille intermittierend entlang dieser Peripherie dieses Körpers erstreckt und dieser mindestens eine Vorsprung sich intermittierend entlang dieser Dichtung erstreckt.

7. Fenster nach Anspruch 1, wobei diese innere und äussere Schichten aus einem transparenten Polymermaterial bestehen.

8. Fenster nach Anspruch 7, wobei diese innere und äussere Schichten aus Polymethylmethacrylat oder Polycarbonat bestehen.

9. Fenster nach Anspruch 1, wobei dieses mindestens eine Wärme erzeugende Element zwischen dieser inneren und äusseren Schichten angeordnet ist und in einer aneinanderstossenden Relation mit dieser Zwischenschicht angeordnet ist, um diese operable Verbindung herzustellen.

10. Heckklappe für ein Fahrzeug, umfassend: einen Hauptteil (22), welcher aus einem Verbundmaterial besteht und eine Öffnung (44) definiert; ein Fenster (46, 48), weiches diese Öffnung (44) bedeckt und einen Körper (48), der sich bis zu einer Peripherie (50) erstreckt, umfasst; wobei dieser Körper (48) eine innere Schicht (54), eine äussere Schicht (52), und eine Zwischenschicht (56), die zwischen dieser inneren und äusseren Schichten angeordnet ist, umfasst; wobei diese Zwischenschicht (56) aus einem transparenten wärmeleitenden Material besteht; wobei mindestens ein Wärme erzeugendes Element (58) mit dieser Zwischenschicht (56) operabel verbunden ist, um Wärme zu erzeugen, um diese auf diese Zwischenschicht (56) zu übertragen und das Fenster (46, 48) abzutauen; und eine Dichtung (64), welche sich um diese Peripherie (50) erstreckt und in einer ineinandergreifenden Relation mit diesem Körper (48) angeordnet ist, um diese Zwischenschicht (56) zwischen der inneren und äusseren Schichten (54, 52) abzudichten (64).

11. Heckklappe nach Anspruch 10, ferner umfassend:
dass die Dichtung eine Aussparung zum Aufnehmen dieser Peripherie dieses Körpers definiert;
dass mindestens eine Rille, welche durch die innere oder äussere Schicht dieses Körpers definiert und in benachbarter und beabstandeter Relation zu dieser Peripherie angeordnet ist; und
dass diese Dichtung mindestens einen Vorsprung aufweist, der sich in diese Aussparung erstreckt und in dieser mindestens einen Rille angeordnet ist, um die verriegelnde Relation zwischen dieser Dichtung und diesem Körper herzustellen.

12. Heckklappe nach Anspruch 11, wobei die mindestens eine Rille eine Vielzahl von Rillen umfasst, die durch die innere oder äussere Schichten definiert sind und der mindestens eine Vorsprung eine Vielzahl von Rillen umfasst, weiche sich in die Aussparung erstrecken und in den jeweiligen Rillen dieser Vielzahl von Rillen angeordnet sind.

13. Heckklappe nach Anspruch 12, wobei diese Vielzahl von Rillen eine erste Rille umfasst, welche durch die innere Schicht definiert ist und eine zweite Rille, welche durch die äussere Schicht definiert ist; und
diese Vielzahl von Vorsprüngen einen ersten Vorsprung umfasst, welcher in der ersten Rille angeordnet ist und einen zweiten Vorsprung, welcher in der zweiten Rille angeordnet ist.

14. Heckklappe nach Anspruch 10, wobei diese innere und äussere Schichten aus einem transparenten Polymermaterial bestehen.

15. Heckklappe nach Anspruch 10, wobei diese Dichtung mindestens einen Vorsprung umfasst, welcher sich von der Dichtung radial nach aussen erstreckt und dieser Hauptabschnitt mindestens eine Vertiefung definiert, die neben dieser Öffnung angeordnet ist, um diesen mindestens einen Vorsprung aufzunehmen und das Fenster mit diesem Hauptabschnitt zu verbinden.

## Revendications

1. Fenêtre de véhicule comprenant :
un corps (48) s'étendant à une périphérie (50) et comportant une couche intérieure (52, 54), une couche extérieure (52), et une couche intermédiaire (56) prise en sandwich entre lesdites couches intérieure et extérieure (52) ;
ladite couche intermédiaire (56) étant constituée d'un matériau transparent conducteur de chaleur ;
au moins un élément de génération de chaleur (58) connecté de manière opérationnelle avec ladite couche intermédiaire (56) pour la génération de chaleur afin de la transférer à ladite couche intermédiaire (56) et dégivrer la fenêtre (46,48);
et un joint d'étanchéité (64) s'étendant autour de la périphérie (50) et disposé dans un rapport de verrouillage avec ledit corps (48) afin d'étanchéifier (64) ladite couche intermédiaire (56) entre lesdites couches intérieure et extérieure (52).

2. Fenêtre selon la revendication 1, comprenant en outre :
ledit joint définissant un évidement pour la réception de ladite périphérie dudit corps ;
au moins une rainure définie par ladite couche intérieure ou ladite couche extérieure dudit corps et disposée de manière adjacente à, et espacée de, ladite périphérie ; et
ledit joint comportant au moins une protrusion s'étendant dans ledit évidement et disposée à l'intérieur de ladite au moins une rainure afin d'établir le rapport de verrouillage entre ledit joint et ledit corps.

3. Fenêtre selon la revendication 1 ou la revendication 2, selon laquelle ladite au moins une rainure comporte une pluralité de rainures définies par lesdites couches intérieure et extérieure et ladite au moins une protrusion comporte une pluralité de protrusions s'étendant dans ledit évidement et disposées dans des rainures respectives de la pluralité de rainures.

4. Fenêtre selon la revendication 3, selon laquelle :
ladite pluralité de rainures comporte une première rainure définie par ladite couche intérieure et une deuxième rainure définie par ladite couche extérieure ; et
ladite pluralité de protrusions comporte une première protrusion disposée à l'intérieur de ladite première rainure et une deuxième protrusion disposée à l'intérieur de ladite deuxième rainure.

5. Fenêtre selon la revendication 2, selon laquelle ladite au moins une rainure s'étend de manière continue le long de ladite périphérie dudit corps et ladite au moins une protrusion s'étend de manière continue le long dudit joint.

6. Fenêtre selon la revendication 2, selon laquelle ladite au moins une rainure s'étend de manière intermittente le long de ladite périphérie dudit corps et ladite au moins une protrusion s'étend de manière intermittente le long dudit joint.

7. Fenêtre selon la revendication 1, selon laquelle lesdites couches intérieure et extérieure sont constituées d'un matériau transparent en polymère.

8. Fenêtre selon la revendication 7, selon laquelle lesdites couches intérieure et extérieure sont constituées de polyméthylméthacrylate ou de polycarbonate.

9. Fenêtre selon la revendication 1, selon laquelle ladite au moins un élément de génération de chaleur est pris en sandwich entre lesdites couches intérieure et extérieure et est disposé dans un rapport de butée avec ladite couche intermédiaire afin d'établir ladite connexion opérationnelle.

10. Hayon de véhicule comprenant :
une partie principale (22) comprenant un matériau composite et définissant une ouverture (44) ;
une fenêtre (46, 48) recouvrant ladite ouverture(44) et comportant un corps (48) s'étendant vers une périphérie (50) ;
ledit corps (48) comportant une couche intérieure (52, 54), une couche extérieure (52), et une couche intermédiaire (56) prise en sandwich entre lesdites couches intérieure et extérieure (52) ;
ladite couche intermédiaire (56) étant constituée d'un matériau transparent conducteur de chaleur ;
au moins un élément de génération de chaleur (58) connecté de manière opérationnelle à ladite couche intermédiaire (56) afin de générer de la chaleur à transférer à ladite couche intermédiaire (56) et dégivrer la fenêtre (46, 48) ; et
un joint (64) s'étendant autour de ladite périphérie (50) et disposé dans un rapport de verrouillage avec ledit corps (48) afin d'étanchéifier (64) ladite couche intermédiaire (56) entre lesdites couches intérieure et extérieure (52).

11. Hayon selon la revendication 10, comprenant en outre :
ledit joint définissant un évidement pour la réception de ladite périphérie dudit corps ;
au moins une rainure définie par ladite couche intérieure ou ladite couche extérieure dudit corps et disposée de manière adjacente à, et espacée de, ladite périphérie ; et
ledit joint comportant au moins une protrusion s'étendant dans ledit évidement et disposée à l'intérieur de ladite au moins une rainure afin d'établir le rapport de verrouillage entre ledit joint et ledit corps.

12. Hayon selon la revendication 11, selon lequel ladite au moins une rainure comporte une pluralité de rainures définies par lesdites couches intérieure et extérieure et ladite au moins une protrusion comporte une pluralité de protrusions s'étendant dans ledit évidement et disposées dans des rainures respectives de la pluralité de rainures.

13. Hayon selon la revendication 12, selon leque :
ladite pluralité de rainures comporte une première rainure définie par ladite couche intérieure et une deuxième rainure définie par ladite couche extérieure ; et
ladite pluralité de protrusions comporte une première protrusion disposée à l'intérieur de ladite première rainure et une deuxième protrusion disposée à l'intérieur de ladite deuxième rainure.

14. Hayon selon la revendication 10, selon lequel lesdites couches intérieure et extérieure sont constituées d'un matériau transparent en polymère.

15. Hayon selon la revendication 10, selon lequel joint comporte au moins une projection s'étendant radialement vers l'extérieur depuis ledit joint et ladite partie principale définit au moins une indentation disposée de manière adjacente à ladite ouverture pour la réception d'au moins une projection et pour le couplage de ladite fenêtre avec ladite partie principale.
